# NEUE EUROPÄISCHE PATENTSCHRIFT

(11) **EP 0 177 521 B2**
(45) Veröffentlichungstag und Bekanntmachung des Hinweises auf die Entscheidung über den Einspruch: **12.03.1997**
(45) Hinweis auf die Patenterteilung: 31.07.1991
(21) Anmeldenummer: 85901376.5
(22) Anmeldetag: 06.04.1985
(51) Int. Cl.: B01D 39/14, B01D 39/20

(54) **FILTER ZUM ABSCHEIDEN VON FESTSTOFFTEILCHEN AUS GASFÖRMIGEN ODER FLÜSSIGEN MEDIEN**
FILTER ELEMENT FOR SEPARATING SOLID MATERIAL PARTICLES FROM GAS OR LIQUID MEDIA
ELEMENT DE FILTRAGE POUR SEPARER DES PARTICULES DE SUBSTANCES SOLIDES DE MILIEUX GAZEUX OU LIQUIDES

(30) Priorität: 07.04.1984 DE 3413213; 07.04.1984 DE 3413214
(43) Veröffentlichungstag der Anmeldung: 16.04.1986
(73) Patentinhaber: FIRMA HERDING GMBH Entstaubungsanlagen, D-92224 Amberg (DE)
(72) Erfinder: HERDING, Walter, D-8450 Amberg (DE)
(74) Vertreter: Klunker . Schmitt-Nilson . Hirsch
(86) Internationale Anmeldenummer: DE8500101
(87) Internationale Veröffentlichungsnummer: WO8504595

(56) Entgegenhaltungen:
- CH-A- 604 826
- DE-A- 1 753 835
- DE-C- 2 756 644
- DE-U- 1 967 737
- GB-A- 943 624
- US-A-40 885 76
- Saechtling, Zebrowski, Kunststoffhandbuch, Karl Hanser Verlag, München, 1955, Deutschland
- Meyers Lexikon der exakten Naturwissenschaften, zweiter Band, Bibliographisches Institut AG, Mannheim. 1970, Deutschland
- Ullmanns Encyklopädie der technischen Chemie, Bd. 19, 4. Auflage, Verlag Chemie GmbH, Weinheim, 1980, Deutschland
- J. Skeist, Handbook of Adhesives, Second Edition, van Nostrand Company, New York. 1977, USA
- See also references of WO8504595

## Beschreibung

Die Erfindung bezieht sich auf ein Filter zum Abscheiden von Feststoffteilchen aus gasförmigen oder flüssigen Medien, insbesondere Staubpartikeln aus atmosphärischer Luft, bestehend aus einem durchlässigen, formstabilen, porösen Formkörper, dessen an der Oberfläche vorhandenen, großen Poren mit einem Füllmaterial definierter Korngröße gefüllt sind, wobei je nach Kornverteilung des Füllmaterials luftdurchlässige Bereiche verschieden großer, aber definierbarer Porenweite gebildet sind.

Aus der deutschen Offenlegungsschrift. DE-A-28 07 159, ist ein gesinterter Filter aus Kunststoff für atmosphärische Luft bekannt. Der Filter ist formstabil und kann entsprechend den Einsatzbedingungen mit einem darauf angestimmten Öffnungsquerschnitt seiner filtrierenden Wände eine äußere, besonders angepaßte Filterform bzw. Raumform aufweisen.

Aus der britischen Patentschrift GB-A- 746 380 ist ebenfalls ein formstabiler, elastischer und poröser Filter aus Kunststoff für atmosphärische Luft bekannt. Der Kunststoff besitzt eine gummiähnliche Eigenschaft, und es ist der Filter selbst schlauchförmig ausgebildet.

Diese beiden bekannten Filter sind so ausgeführt, daß sie, bedingt durch ihre Formgebung, im Gegenstrom-Verfahren gereinigt werden können. Mit zunehmender Nutzungsdauer nimmt jedoch der Filterwiderstand zu. Ursache ist, daß ein Teil des zu filternden Mediums, z. B. der Stäube, beim Reinigungsvorgang, z. B. Ausblasen, im "Windschatten" der Filterwände haften bleibt. bzw. sich im Filtermaterial stark verspreizt.

Durch die US-A- 4 088 576 ist ferner ein Filter zum Abscheiden von Verunreinigungen aus Medien bekannt, welches von einem metallischen Formkörper und einer auf diesem aufgebrachten, ebenfalls metallischen Beschichtung besteht. Der Formkörper, der mit größeren Poren für das Durchführen des gefilterten Mediums hergestellt ist, ist oberflächenseitig mit der Beschichtung versehen, wobei diese, aus feinen Partikeln besteht, die mindestens teilweise die größeren Poren, durch Hinterlassen kleiner Poren, bedeckt. Auf diese Weise wird ein tragfähiger, formstabiler Formkörper geschaffen, der mechanischen Anforderungen vielfach genügt und der, bedingt durch seine, feine Poren aufweisende Beschichtung die entsprechende Filtration gewährleistet. Die Verbindung der feinen Partikel der Beschichtung mit den größeren Partikeln des Formkörpers wird durch Wärmeeinwirkung und damit durch metallische Verschmelzung der Partikel beider Gattungen erreicht, wobei diese Verbindung noch sehr große Poren in der Beschichtung hinterläßt, durch die Verunreinigungen in das Filter eindringen und dort, insb. im Bereich der Beschichtung, einnisten. Durch die in das Filter eingedrungenen und dort gelagerten Verunreinigungen wird die Filterwirkung beeinträchtigt, und der Strömungswiderstand derart erhöht, daß nur mit einem erheblich erhöhtem Strömungsaufwand eine noch erträgliche Wirkung der Filtration erzielt wird.

Aus dem Dokument DE-C-11 76 850 ist ein Filter bekannt, der durch Zusammensintern von Polyäthylenpartikeln mit zwei unterschiedlichen Molekulargewichten hergestellt ist. Dieser Filter ist nicht mit körnigem Füllmaterial beschichtet.

Aus dem Dokument GB-A-963 680 ist ein zweischichtiger Filter bekannt, bei dem die eine Schicht aus gröberen versinterten Polytetrafluoräthylen-Körnern und die andere Schicht aus feineren versinterten Polytetrafluoräthylen-Körnern besteht.

Der Erfindung liegt die Aufgabe zugrunde, ein formstabiles Filter zu schaffen, das sowohl einfach hergestellt und für verschiedene Anwendungsfälle adaptiert, als auch ohne großen Aufwand gereinigt werden kann, sowie nach erfolgter Reinigung wieder seine volle Filterwirkung aufweist und bei dem die Filtration des Verunreinigungen führenden Mediums überwiegend an der Oberfläche des Filters stattfinden kann.

Gemäß der Erfindung wird diese Aufgabe bei einem Filter der eingangs genannten Art dadurch gelöst, daß das Füllmaterial elastisch ist, aus Polytetrafluoräthylen besteht, eine sehr glatte, gleitfähige, aber nicht benetzbare Oberfläche aufweist und dieses mit dem Formkörper mittels eines Haftvermittlers fest verbunden ist, daß durch reversible Formänderungen des Formkörpers die feste Haftung des Füllmaterials am Formkörper wie auch dessen Konsistenz nicht beeinträchtigt ist und daß der Formkörper aus durch eine Wärmeeinwirkung verbundenen Partikeln besteht, die aus einem körnigen Polyäthylen mit einem Anteil von 20 - 50 Gewichts-% niedermolekularem und einem Anteil von 50 - 80 Gewichts-% hochmolekularem Polyäthylen bestehen.

Durch diese Maßnahmen wird nicht nur die der Erfindung zugrunde liegende Aufgabe vorteilhaft gelöst, sondern es werden weitere Vorteile erzielt. So ist es beispielsweise möglich, durch entsprechende Wahl der Korngröße der Beschichtung an der Oberfläche des Filters, die jeweils geforderte Porenweite zu erhalten, wodurch eine optimale Anpassung des Filters an den Verunreinigungsgrad des Mediums möglich ist. Durch diese Optimierung der Porenweite wird neben einem hohen Abscheidegrad auch eine Optimierung der Druckverluste und damit auch Wirtschaftlichkeit des Filters in Bezug auf dessen Betrieb erreicht. Diese erfindungsgemäßen Maßnahmen haben den weiteren Vorteil, daß durch die kleinere Porenweite der Beschichtung an der Oberfläche des gesinterten Formkörpers, bereits an dieser Oberfläche selbst sehr feinen Partikeln, z. B. Staubpartikeln, der Eintritt in das Filter verwehrt wird. Auf diese Weise erfolgt die Filtration, im Gegensatz zu den bekannten Filtenfilzen und Filterfliesen oder großporigen Oberflächenbeschichtungen, an der Oberfläche des Filters und folgt damit dem Prinzip der sogenannten Oberflächenfiltration, Dies hat den weiteren Vorteil daß sowohl trockene als auch feuchte bzw. ölige Partikel an der Filteroberfläche abgeschieden werden. Von dieser Oberfläche lassen sich diese Partikel durch Abblasen oder Gegenströmen eines Teilstromes des gefilterten Mediums, d. h. im Gegenstromverfahren, oder oberflächiges Abwischen bzw. Abrütteln vollständig entfernen.

Gemäß einem weiteren Merkmal zeichnet sich das Filter dadurch aus, daß dieser elastisch aufblähbare Abschnitte und abstützende Abschnitte aufweist.

Durch diese elastische Aufblähbarkeit einzelner Abschnitte des Filters, d. h. des Formkörpers und dessen Oberflächenbeschichtung wird das Abreinigen des Filters durch das während des Reinigungsprozesses im Gegenstrom durch das Filter geförderte, gereinigte Medium außerordentlich begünstigt. Dies besonders deshalb, weil durch das im Gegenstrom geförderte Medium die einzelnen Filterkörper aufgebläht werden, wodurch die auf der Oberfläche des Filters abgelagerten Schmutzpartikel ihren Halt an dieser Oberfläche verlieren und von der Oberfläche des Filters abgetrennt werden. Bei diesem Aufblähen werden der Formkörper und damit auch dessen Oberfläche elastisch gestreckt bzw. vergrößert, wodurch das im Gegenstrom strömende Medium die auf der Filteroberfläche und in den Poren, insb. der Beschichtung, sitzenden Schmutzpartikel ablösen und diese austragen kann. Hinzu kommt, daß durch die elastische Aufblähbarkeit des Formkörpers und dessen Beschichtung die Rißbildung an diesen vermieden und auch diese unterschiedlichen Materialstrukturen von Formkörper und Oberflächenbeschichtung voneinander nicht gelöst werden.

Ein weiteres Merkmal dieses Filters zeichnet sich dadurch aus, daß der Formkörper durch balgförmig ausgebildete Wände mit etwa gleichdicken Querschnitten eine große Filterfläche und innere, rombenförmige bzw. tannenbaumförmige Fließquerschnitte für die gereinigten Medien aufweist.

Diese Ausführung des Formkörpers ermöglicht die Unterbringung einer großen Filterfläche auf relativ keinem Raum, was zur Folge hat, daß auch das Gehäuse für die Filterkörper kleiner und damit raumsparender ausgeführt werden kann,

Auch besteht eine vorteilhafte Weiterbildung des Filters darin, daß das feinporige Füllmaterial die außen liegenden Körner des Formkörpers bis zu einer gewissen Tiefe sowohl diese Körper als auch die Zwischenräume zwischen diesen überdeckt und dadurch eine Oberflächenfiltration des Mediums erlaubt.

Dadurch, daß die feinen Körner des Füllmaterials die gewisse Tiefe am Mantel des Formkörpers durchdringen und dort den feinen Filtrationsbereich bilden, lassen sich die abzuscheidenden Partikel bereits in diesem Bereich abscheiden, so daß sie kaum in die größeren Poren des Filterkörpers eindringen können. Dies hat zur Folge, daß auch die Druckverluste am Filter gering gehalten werden können, weil diese, größeren Poren weitgehend von Verunreinigungen befreit, gehalten werden können.

Ein weiteres Merkmal dieses Filters zeichnet sich noch dadurch aus, daß die Gewichtsverhältnisse des Materials des Formkörpers und Füllmaterials sich im Verhältnis von etwa 100:1 verhalten.

Durch die besondere Materialwahl für den Formkörper und dessen Oberflächenbeschichtung einerseits und die besonderen Mischungsverhältnisse dieser Materialien einzeln und/oder untereinander andererseits lassen sich nicht nur die Standzeiten und damit die Lebensdauer der Filter verlängern, sondern es wird auch der Versprödungsgrad außerordentlich gering gehalten, was zur Folge hat, daß kaum Risse an den Filtern entstehen, durch die ungefiltertes Medium in bereits gefiltertes Medium eindringen könnte.

Diese besondere Materialauswahl trägt auch dazu bei, daß dieses Filter für eine Reihe von Anwendungen eingesetzt werden kann, so etwa im Bergbau, bei Klimaanlagen, wie auch Motorentechnik, Öl- und Wasserfiltration u. a. m.

Diese Materialauswahl hat auch den Vorteil, daß selbst die gegensätzlichen, mechanischen Beanspruchungen des Formkörpers, insb. durch Walkarbeit, während der Filtrier- und Abreinigungsphase zu keiner Materialermüdung sowohl bei dem aus Polyäthylen bestehenden Formkörper und der aus Polytetrafluoräthylen bestehenden Oberflächenbeschichtung bzw. den Füllkörper führen können. Hinzu kommt, daß die hier verwendeten Werkstoffe selbst bei Einwirkung von Flüssigkeiten, wie z. B. Wasser, nicht aufquellen und auch keine Adhäsion aufweisen, was eine vollständige Abreinigung des Filters, selbst nach vielen Reinigungszyklen gewährleistet.

Untersuchungen haben ferner ergeben, daß der hochmolekulare Anteil maßgebend für die Rißfreiheit und Stabilität des Filters ist, Der niedermolekulare Anteil dagegen garantiert die elastische, aber formstabile Verbindung der einzelnen Körner untereinander.

Eine relativ hohe Strömungsunter- bzw. Überdruckbeanspruchung bei großen, etwa gleichbleibenden, inneren Strömungsquerschnitten für die gefilterten Medien ist durch die Unterteilung des Filters in verformbare und abstützende Abschnitte gewährleistet.

Ein hoher Filterwirkungsgrad und eine verhältnismäßig große Filterfläche bei kleinem Filtergewicht liegt durch das balgförmige Filterelement vor. Die Balgform bleibt bei allen Beanspruchungsarten stabil, so daß jeder Wandabschnitt am Filtervorgang teilnimmt. Die schadstoffseitigen Filterflächen legen sich auch bei hohem Unterdruck nicht aneinander an.

Ausführungsbeispiele der Erfindung sind in der Zeichnung schematisch dargestellt. Es zeigt:
- Fig. 1: ein formstabiles Filterelement.
- Fig. 2: einen vergrößerten Querschnitt II-II durch das Filterelement nach Fig, 1,
- Fig. 3: einen Ausschnitt III des Filterelementes nach Fig. 2,
- Fig. 4: einen Schnitt durch das Filter in der Ebene IV-IV nach Fig. 3,
- Fig. 5: einen gegenüber Fig. 3 abgewandelten Ausschnitt III₁ des Filters nach Fig. 2,
- Fig. 6, 7: stark vergrößert gezeichnete Details, entsprechend der Einzelheit III nach Fig. 2,

Der Filter 20 gemäß der Erfindung besteht im wesentlichen aus einem Sockel 21 mit Befestigungsbohrungen 22 und einem balgförmigen Abschnitt 23.

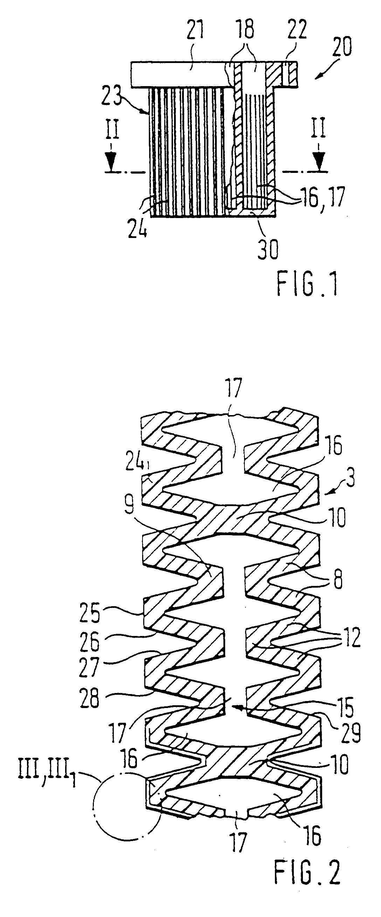

Der Abschnitt 23 weist nach den Fig. 1 und 2 Rippen 24, Außenflächen 25-27, Wände 28, 29 einen Boden 30, elastische und abstützende bzw. starre Abschnitte 8, 9 Stege 10 und einen tannenbaumförmigen inneren Fließquerschnitt 15, bestehend aus einzelnen Kanälen 16, 17 auf. Die Kanäle 16 17 münden in sockelseitige Hauptkanäle 18.

Die Wände 28, 29 und die Rippen 24 weisen etwa gleich dicke Querschnitte 12 auf.

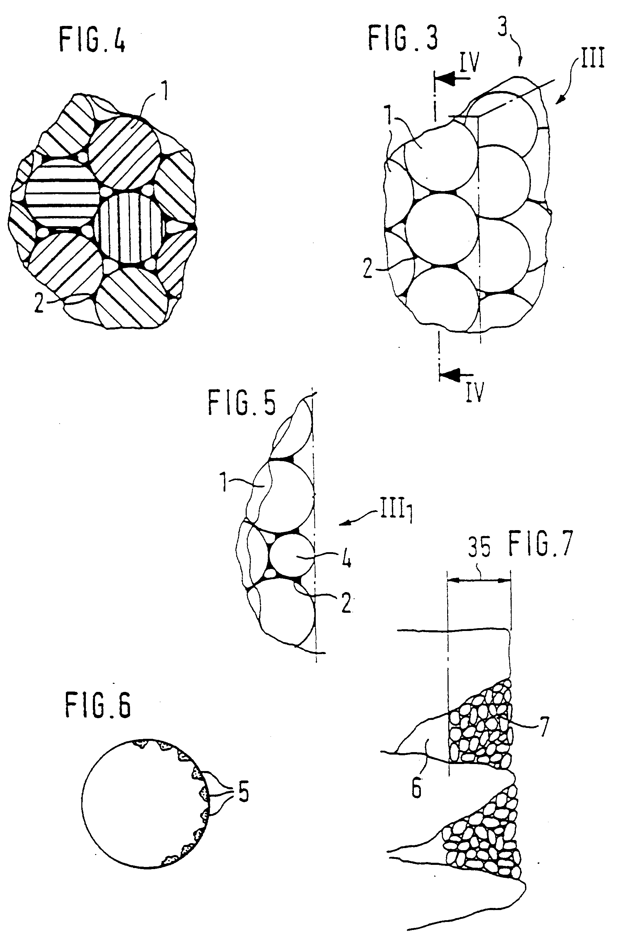

Nach Fig. 3 sind Körner 1 aus hochmolekularem und niedermolekularem Polyäthylen, durch Sintern, in den Bereichen 2 zu einem formstabilen Körper 3 miteinander verbunden.

Nach Fig. 4 sind die Bereiche 2 in der anderen Ansicht gemäß der Schnittführung IV-IV nach Fig. 3 ersichtlich. Somit liegt eine elastische Filterstruktur vor, die gegenüber mechanischen Beanspruchungen, wie Vibration, Rütteln, Beanspruchungen auf Druck, Scherung stabil ist.

Nach Fig. 5 sind Körner 1, 4 aus hochmolekularem und niedermolekularem Polyäthylen mit unterschiedlicher Korngröße, durch Sintern, entsprechend der Bereiche 2 miteinander verbunden.

Ein Füllmaterial 5 (Fig. 6) aus Polytetrafluoräthylen (PTFE) bedeckt die Oberflächenporen des gesinterten Formkörpers des Filters und somit auch der außenliegenden Körner 1, 4. Die Füllmenge kann sich dabei gegenüber von der Filteraußenfläche bis über die Hälfte der Körnerobenfläche hinaus, gemäß dem Abstand 35 nach Fig. 7 erstrecken.

Das Füllmaterial 5 ist mit den Körnern 4 fest verbunden.

Nach Fig. 7 sind die Poren 6 mit einer Weite von 30-50 µm oder von 150-500 µm, je nach Anwendungsfall, des gesinterten Polyäthylen (Körner 1, 4) durch das Polytetrafluoräthylen (Füllmaterial 5) etwa um den Faktor 10 auf ca. 8-10 µm große Poren 7 verkleinert.

Neben der rechteckigen Form des filternden Abschnittes 23 kann dieser auch gebogen oder eckig ausgebildet sein. Damit ist das Filterelement in einfacher Weise an vorgegebene Raumverhältnisse anzupassen.

Das Filterelement ist nicht nur in den gängigen Temperaturbereichen einsetzbar, sondern auch für wasser-, säure- und laugenhaltige, auch ölige Luftströmungen geeignet und kann auch zum Trennen von Feststoffen aus Flüssigkeiten eingesetzt werden.

Die Herstellung des Filters 20 wird in der Weise vorgenommen, daß zuerst ein Formkörper hergestellt wird, dessen Porenweite infolge groben Materials relativ groß ausgelegt ist. Die große Porenweite hat den Vorteil, daß der Öffnungsquerschnitt zwischen den gesinterten Partikeln groß ist, die einzelnen Partikel aber infolge ihrer Sinterung eine ausreichende Stabilität dem Formkörper, insb. gegen mechanische Beanspruchungen, verleihen. Der auf diese Weise hergestellte, formstabile Formkörper mit noch großen Öffnungsquerschnitten für den Ein- oder Austritt des zu filternden Mediums wird einer Nachbehandlung unterzogen in der Weise, daß die offenen Bereiche an seiner Oberfläche mit einer geringere Öffnungsquerschnitte zurücklassenden Füllmasse aufgefüllt werden. Eine solche Möglichkeit zum Verringern der Öffnungsquerschnitte wird durch die Verwendung von Pulvern definierter Kornverteilung ermöglicht. Mit solchen Pulvern können die Größen der Porenoberflächen dem anfallenden, zu filternden Medium, z. B. einem Staub, angepaßt werden.

Gemäß einem konkreten Ausführungsbeispiel besteht das Füllmaterial - in dem Zustand zum Auftragen auf den Formkörper - aus einem Gemisch von Polytetrafluoräthylen, Suspensionsflüssigkeit, wie Wasser, und Kleber im Volumenverhältnis von ca. 12:14:1. Nach dem Auftragen auf den Formkörper wird die flüssige Komponente durch Verdunstung ausgeschieden. Der Kleber kann handelsüblicher Kleber sein. Das Füllmaterial kann als wäßrige Suspension von Füllmaterial und Haftvermittler z.B. mittels einer Spritzpistole aufgebracht werden, und die Verteilung des Feststoffanteils auf dem gesinterten Formkörper des Filters kann durch Bürsten vorgenommen werden.

## Patentansprüche

1. Filter zum Abscheiden von Feststoffteilchen aus gasförmigen oder flüssigen Medien, insbesondere Staubpartikeln aus atmosphärischer Luft, bestehend aus einem durchlässigen, formstabilen, porösen Formkörper, dessen an der Oberfläche vorhandene, große Poren mit einem Füllmaterial definierter Korngröße gefüllt sind, wobei je nach Kornverteilung des Füllmaterials luftdurchlässige Bereiche verschieden großer, aber definierbarer Porenweite gebildet sind, dadurch gekennzeichnet, daß das Füllmaterial (5) elastisch ist, aus Polytetrafluoräthylen besteht, eine sehr glatte, gleitfähige, aber nicht benetzbare Oberfläche (25 - 27) aufweist und dieses mit dem Formkörper (3) mittels eines Haftvermittlers fest verbunden ist, daß durch reversible Formänderungen des Formkörpers die feste Haftung des Füllmaterials am Formkörper wie auch dessen Konsistenz nicht beeinträchtigt ist und daß der Formkörper (3) aus durch eine Wärmeeinwirkung verbundenen Partikeln besteht, die aus einem körnigen Polyäthylen mit einem Anteil von 20 - 50 Gewichts-% niedermolekularem und einem Anteil von 50 - 80 Gewichts-% hochmolekularem Polyäthylen bestehen.

2. Filter nach Anspruch 1, dadurch gekennzeichnet, daß dieser elastisch aufblähbare Abschnitte (8) und abstützende Abschnitte (9, 10) aufweist.

3. Filter nach Anspruch 1, dadurch gekennzeichnet, daß der Formkörper (3) durch balgförmig ausgebildete Wände (28, 29) mit etwa gleichdicken Querschnitten (12) eine große Filterfläche und innere, rombenförmige bzw. tannenbaumförmige Fließquerschnitte (15) für die gereinigten Medien aufweist.

4. Filter nach Anspruch 1, dadurch gekennzeichnet, daß das feinporige Füllmaterial (5) die außen liegenden Körner des Formkörpers (3) bis zu einer gewissen Tiefe (35) sowohl diese Körner als auch die Zwischenräume zwischen diesen überdeckt und dadurch eine Oberflächenfiltration des Mediums erlaubt.

5. Filter nach Anspruch 1, dadurch gekennzeichnet, daß die Gewichtsverhältnisse des Materials des Formkörpers (3) und Füllmaterials (5) sich im Verhältnis von etwa 100:1 verhalten.

## Claims

1. A filter for the separation of particles of solid matter from gaseous or fluid media, more especially particles of dust from atmospheric air, consisting of a permeable, shape-stable, porous shaped body, whereof the large pores existing at the surface are filled with a filling material of specific grain size, in which respect, depending on the grain distribution of the filling material, air-permeable regions of differently large, but definable pore width are formed, characterised in that the filling material (5) is elastic, consists of polytetrafluoroethylene, has a very smooth, able-to-slide, but not wattable surface (25-27) and this is connected securely to the shaped body (3) by means of an adhesion imparter, in that as a result of reversible shape changes of the shaped body the secure adhesion of the filling material to the shaped body as also the consistency thereof is not impaired and in that the shaped body (3) consists of particles which are connected by a thermal action and which consist of a granular polyethylene with a proportion of 20 to 50% by weight of low-molecular, and a proportion of 50 to 80% by weight of high-molecular, polyethylene.

2. A filter according to Claim 1, characterised in that this has elastically inflatable portions (8) and supporting portions (9, 10).

3. A filter according to Claim 1, characterised in that the shaped body (3), as a result of walls (28,29) designed in a bellows-shaped manner and having approximately identically thick cross-sections (12), has a large filter area and inner, rhombic or respectively fir-tree-shaped flow cross-sections (15) for the cleaned media.

4. A filter according to claim 1, characterised in that the fine-pored filling material (5) masks both the outwardly lying grains of the shaped body (3) and the interstices between these grains up to a certain depth (35) and thereby allows a surface filtration of the medium.

5. A filter according to Claim 1, characterised in that the weight ratios of the material of the shaped body (3) and filling material (5) are in the ratio of approximately 100:1.

## Revendications

1. Filtre pour la séparation de particules solides de milieux gazeux ou liquides, notamment de particules de poussière de l'air atmosphérique, comprenant un corps profilé perméable, indéformable et poreux dont les pores importants se trouvant sur la surface du corps sont remplis d'une charge ayant une valeur granulométrique déterminée, des zones perméables à l'air présentant des largeurs de pore de dimensions différentes, mais pouvant être déterminées, étant formées en fonction de la répartition granulométrique de la charge, caractérisé en ce que la charge (5) est élastique, constituée de polytétraflouréthylène, présente une surface (25 à 27) extrêmement lisse, glissante mais non mouillable, et en ce que la charge est reliée à demeure au corps (3) par un moyen adhésif, en ce que l'adhésion ferme de la charge au corps ainsi que sa consistance ne sont pas influencées par des modifications de forme réversibles du corps, et en ce que le corps profilé (3) est formé à partir de particules reliées les unes aux autres par traitement thermique, les particules étant constituées par un polyéthylène granuleux composé de 20 à 50 % en poids d'un polyéthylène de faible poids moléculaire et de 50 à 80 % en poids d'un polyéthylène de fort poids moléculaire.

2. Filtre suivant la revendication 1, caractérisé en ce qu'il comporte des parties élastiquement gonflables (8) et des parties d'appui (9, 10).

3. Filtre suivant la revendication 1, caractérisé en ce que le corps profilé (3) comporte une surface importante de filtrage formée par des parois pliées en accordéon (28, 29) et présentant des sections transversales ayant à peu près la même épaisseur, et des sections d'écoulement internes en forme de losange ou d'arbre de noël (15) pour les milieux purifiés.

4. Filtre suivant la revendication 1, caractérisé en ce que la charge à pores fins (5) recouvre aussi bien les grains extérieurs du corps profilé (3) que les espaces entre ceux-ci jusqu'à une certaine profondeur (35) de manière à permettre un filtrage superficiel du milieu.

5. Filtre suivant la revendication 1, caractérisé en ce que le rapport des poids du matériau du corps profilé (3) et de celui de la charge (5) est d'à peu près 100:1.
